**Europäisches Patentamt**

**European Patent Office**

**Office européen des brevets**

(19)

(11) Veröffentlichungsnummer: **0 007 051**
**B1**

(12) **EUROPÄISCHE PATENTSCHRIFT**

(45) Veröffentlichungstag der Patentschrift: **29.04.81**

(51) Int. Cl.³: **C 07 C 50/34, C 07 C 45/45**

(21) Anmeldenummer: **79102210.6**

(22) Anmeldetag: **02.07.79**

(54) **Verfahren zur Herstellung von Chinizarin.**

(30) Priorität: **12.07.78 DE 2830554**

(43) Veröffentlichungstag der Anmeldung:
**23.01.80 Patentblatt 80/2**

(45) Bekanntmachung des Hinweises auf die Patenterteilung:
**29.04.81 Patentblatt 81/17**

(84) Benannte Vertragsstaaten:
**CH DE FR GB IT**

(56) Entgegenhaltungen:
**AT - B - 64 815**
**DE - A - 2 014 566**
**DE - B - 1 543 352**
**DE - C - 568 311**
**US - A - 2 003 859**
**US - A - 2 445 538**
**US - A - 2 752 364**

(73) Patentinhaber: **BAYER AG**
**Zentralbereich Patente, Marken und Lizenzen**
**D-5090 Leverkusen 1, Bayerwerk (DE)**

(72) Erfinder: **Schmitz, Reinold, Dr.**
**Im Kerberich 36**
**D-5068 Odenthal (DE)**

Courier Press, Leamington Spa, England.

Verfahren zur Herstellung von Chinizarin

Gegenstand der Erfindung ist ein verbessertes Verfahren zur Herstellung von Chinizarin, einem wichtigen Farbstoffzwischenprodukt, durch Umsetzung von Phthalsäureanhydrid mit p-Chlorphenol in borsäurehaltiger Schwefelsäure bei erhöhten Temperaturen.

Obwohl dieses Verfahren seit Jahrzehnten bekannt ist (vgl. DE—PS 255 031) und technisch genutzt wird, konnte es nie ganz befriedigen, da es mit einer Reihe schwerwiegender Nachteile behaftet ist.

In diesem Zusammenhang ist insbesondere der hohe Schwefelsäureverbrauch zu nennen (vgl. US—PS 2 445 538, Spalte 1). Es hat daher nicht an Versuchen gefehlt, die Schwefelsäuremenge zu reduzieren. Jedoch wurden dabei stets Ausbeute und Reinheitsgrad des Reaktionsprodukts beeinträchtigt (siehe ebenda, Spalte 2). Gemäß US—PS 2 445 538 kann die Schwefelsäuremenge ohne Ausbeuteeinbußen beträchtlich herabgesetzt werden, wenn man das p-Chlorphenol dem Gemisch aus Phthalsäureanhydrid Borsäure und 95%iger, vorzugsweise 98- bis 100%iger Schwefelsäure bei Reaktionstemperatur langsam unter Einhaltung bestimmter Reaktionsbedingungen zufügt.

Dieses Verfahren hat indessen den Nachteil, daß es verhältnismäßig aufwendig ist und bei seiner technischen Durchführung eine relativ komplizierte Apparatur verlangt sowie schwierig zu kontrollieren ist.

Auch diverse andere Methoden (vgl. DE—OS 1 543 352 und 2 014 566 sowie US—PS 2 752 364) zur Verbesserung dieser technisch wichtigsten Chinizarinsynthese haben deren vielseitige Probleme nicht vollauf lösen können, da sie entweder die Zugabe sehr toxischer Chemikalien (Fluorverbindungen oder Trichlorbenzol) erfordern oder zusätzliche Arbeitsgänge benötigen.

Es wurde nun gefunden, daß man auf einfache Weise und ohne Zusatz kostspieliger und gegebenenfalls toxischer Substanzen Chinizarin von hoher Qualität in guten Ausbeuten erhält, wenn man eine Mischung von Phthalsäureanhydrid, p-Chlorphenol, Schwefelsäure und Borsäure bzw. Borsäureanhydrid, welche mindestens 10 Gew.% freies $SO_3$, bezogen auf Schwefelsäure, enthält und in welcher das Gewichtsverhältnis von p-Chlorphenol zur Gesamtmenge $H_2SO_4 + SO_3$ 1 : 1.5 — 4.0 beträgt, vorlegt und diese Mischung auf 150—220°C erhitzt.

Bei der Berechnung des freien $SO_3$-Gehalts wird in Übereinstimmung mit der in der US—PS 2 445 538 (Spalte 3, Zeilen 55 ff) getroffenen Annahme davon ausgegangen, daß im Reaktionsgemisch $H_2SO_4$, $B_2O_3$ und $SO_3$ vorliegen, d.h. daß bei der Verwendung von freier Borsäure das gemäß $2 H_3BO_3 + 3SO_3 \rightarrow 3H_2SO_4 + B_2O_3$ verbrauchte $SO_3$ als $H_2SO_4$ gerechnet wird.

Der glatte Reaktionsverlauf des erfindungsgemäßen Verfahrens muß als ausgesprochen überraschend angesehen werden, da aus der US—PS 2 445 538 (Spalte 4, Zeilen 15—20) bekannt war, daß bei der Verwendung von mehr als 10%igem Oleum die Bildung von Nebenprodukten gefördert wird, was sich auf Ausbeute und Reinheit des Chinizarin negativ auswirkt.

Im übrigen wird das erfindungsgemäße Verfahren unter üblichen Bedingungen, d.h. in dem genannten Temperaturintervall und bei einem Mengenverhältnis p-Chlorphenol/-Phthalsäureanhydrid von 1:2—3, durchgeführt.

Der $SO_3$-Gehalt im eingesetzten Oleum liegt bei 10—65 Gew.-%.

Vorzugsweise arbeitet man jedoch mit 10 bis 20%igem Oleum bei 190—210°C, wobei die Umsetzung nach 15—20 Std. praktisch abgeschlossen ist.

Nach einer besonders wirtschaftlichen Variante des neuen Verfahrens werden p-Chlorphenol und Phthalsäureanhydrid im Gewichtsverhältnis von 1:1,2—1,5 (vorzugsweise 1,3) eingesetzt.

Daß diese drastische Herabsetzung der Phthalsäureanhydridmenge nicht Qualität und Ausbeute des Reaktionsproduktes beeinträchtigt, muß als überraschend angesehen werden, da in der US—PS 2 445 538 (spalte 6, Zeilen 53—57) gelehrt wird, daß die Verwendung von wesentlich weniger als 1,8 Gewichtsteilen Phthalsäureanhydrid bezogen auf 1 Teil Phenolderivat zu Ausbeuteverringerungen führt.

Es ist allerdings zweckmäßig, während der Reaktion dafür zu sorgen, daß das Phthalsäureanhydrid während der Reaktion nicht aus dem Reaktionsgefäß absublimiert und möglicherweise die Leitungen, die die Reaktionsgase abführen, verstopft, indem man Wände und Deckel des Reaktionsgefäßes sowie gegebenenfalls die abführenden Leitungen auf 135—155°C aufheizt. Gemäß US—PS 2 752 364 wird die Verstopfungsgefahr durch Zusatz von Trichlorbenzol beseitigt, eine für das Labor elegante Maßnahme, da das Trichlorbenzol durch geringen Rückfluß alles sublimierte Phthalsäureanhydrid in die Reaktion zurückspült. Im technischen Maßstab verbietet sich jedoch die Verwendung dieses Chlorkohlenwasserstoffs wegen seiner Toxizität. Weniger toxische Lösungsmittel haben andererseits nicht den gewünschten Erfolg gebracht. (vgl. US 2 752 364, Beispiel 2).

Die Aufarbeitung des Reaktionsgemisches kann auf verschiedene Art und Weise erfolgen. Man kann beispielsweise entsprechend US—PS 2 003 859 zunächst den in DE—PS 255 031 beschriebenen Borschwefelsäureester des Chinizarins isolieren. Dieses Verfahren hat den Vorteil, daß der größte Teil der Schwefelsäure in hochprozentiger Form und relativ borsäurearm anfällt. Diese Abfallschwefelsäure kann dadurch besser wieder aufgearbeitet werden, z.B. durch Spaltung zu $SO_2$, das in die Schwefelsäurefabrikation wieder eingesetzt wird. Der gesamte Ansatz oder der isolierte Borester kann — besonders im Labor — durch Verdünnen mit Wasser, Neutralisation — beispielsweise mit Ammoniak —, einstündiges Erhitzen des neutralisierten Gemisches auf 95 bis 100°C aufgearbeitet werden. Man kann aber auch (vgl. Ind. and Eng. Chem. 46, S. 1153) den Ansatz nach Verdünnen mit Wasser auf eine etwa 30%ige Schwefelsäure oder den isolierten Borschwefelsäureester in wäßriger Suspension im geschlossenen Kessel 3 bis 5 Stunden auf 130°C heizen und erhält dann nach dem Absaugen Waschen und Trocknen praktisch das gleiche Ergebnis wie bei der Aufarbeitung durch Neutralisation. Sowohl bei der sauren als auch bei der neutralen Aufarbeitung wirkt ein Zusatz von nichtionogenen oberflächenaktiven Stoffen vom Typ der Polyglykole (z.B. der Polyglykolether des Oleylalkohols oder Polyglykolester der Abietinsäure in Konzentrationen von 0,5—5% bezogen auf das Flüssigkeitsvolumen günstig auf den Gehalt des gewonnenen Chinizarins an in Chlorbenzol unlöslichen Substanzen. Dieser chlorbenzolunlösliche Anteil des Chinizarins ist wesentlich für die Brauchbarkeit des Chinizarins bei Farbstoffsynthesen. Ein hoher Anteil würde eine Reinigung etwa durch Sublimation oder Destillation nötig machen. Das nach dem neuen Verfahren hergestellte Chinizarin enthält 0,5—2% in Chlorbenzol Unlösliches und ist für praktisch alle Zwecke ohne weitere Reinigung brauchbar.

Das neue Verfahren sei anhand der folgenden Beispiele näher erläutert.

### Beispiel 1

In eine Mischung aus 410 ml 20%igem Oleum, 320 g Phthalsäureanhydrid und 114 g Borsäureanhydrid ($B_2O_3$) trägt man bei 120°C 252 g 4-Chlorphenol ein. Das Reaktionsgemisch wird 16 Stunden unter einer Stickstoffatmosphäre auf 200°C erhitzt. Die nicht vom Reaktionsgemisch benetzten Wände des Reaktionsgefäßes werden dabei zweckmäßigerweise auf 150° erhitzt. Danach wird auf 100°C abgekühlt und das Reaktionsgemisch in 5 Liter Wasser gegeben. Nach neutralisation mit 25%igem $NH_3$ und nach Zugabe von 25 g aus handelsüblichen Emulgators auf Polyäther-Basis wird 1 Stunde lang auf 95—100°C erhitzt. Anschließend wird abgesaugt und mit 60 bis 80°C heißem Wasser neutral gewaschen. Man erhält nach dem Trocknen 401,3 g (79,7% der Theorie bezogen auf 4-Chlorphenol) Chinizarin, das 93,5%ig ist und 1,1% in Chlorbenzol unlösliche Substanzen enthält. Erhitzt man statt 16 Stunden auf 200°C 20 Stunden auf 195°C, so erhält man 398,6 g (79,8% der Theorie) 94,3%iges Chinizarin, das nur 0,8% chlorbenzolunlösliches enthält.

### Beispiel 2

Zu einer Mischung aus 210 g 4-Chlorphenol und 170 g Borsäure läßt man innerhalb einer halben Stunde und bei bis 160°C ansteigender Temperatur und unter Luftabschluß 340 ml 65%iges Oleum zulaufen. Dabei stellt sich im Reaktionsgemisch eine Schwefelsäure mit 11% freiem $SO_3$ ein. Dann setzt man 290 g Phthalsäureanhydrid zu, und heizt den Ansatz 16 Stunden auf 200°C. Die nicht vom Reaktionsgemisch benetzten Wände des Reaktionsgefäßes werden dabei zweckmäßigerweise auf 150°C erhitzt. Arbeitet man wie in Beispiel 1 auf, so erhält man 337 g (80,2% der Theorie) 93,4%iges Chinizarin. (In Chlorbenzol unlöslicher Anteil: 0,9%). Wird in diesem Beispiel statt 170 g Borsäure nur 150 g Borsäure eingesetzt, so erhält man 338,5 g (80,2% der Theorie) 93,0%iges Chinizarin (in Chlorbenzol unlöslicher Anteil: 1%).

### Beispiel 3

Ein Gemisch aus 380 ml 20%igem Oleum, 320 g Phthalsäureanhydrid, 114 g Borsäureanhydrid und 252 g 4-Chlorphenol wird unter einer Stickstoffatmosphäre 16 Stunden lang auf 195° erhitzt. Man verdünnt das Reaktionsgemisch nach dem Abkühlen auf 100° mit 1800 ml Wasser, setzt 20 g handelsüblichen Emulgator auf Polyätherbasis zu und erhitzt die Mischung in einem Druckgefäß 5 Stunden lang auf 130°. Nach Abkühlen auf 80° wird abgesaugt und mit 80° warmem Wasser neutral gewaschen und getrocknet. Man erhält 390,6 g Chinizarin, das 93,9%ig ist (77,9% der Theorie) und 1% in Chlorbenzol unlösliche Anteile enthält.

### Patentansprüche

1. Verfahren zur Herstellung von Chinizarin durch Umsetzung von Phthalsäureanhydrid, p-Chlorphenol, Schwefelsäure und Borsäure bzw. Borsäureanhydrid bei erhöhten Temperaturen, dadurch gekennzeichnet, daß man eine Mischung der Reaktionspartner, welche mindestens 10 Gewichtsprozent freies $SO_3$, bezogen auf Schwefelsäure, enthält und in welcher das Gewichtsverhältnis von p-Chlorphenol zur Gesamtmenge $H_2SO_4 + SO_3$ 1:1,5 bis 4.0 beträgt, vorlegt und diese auf 150—220°C erhitzt.

2. Verfahren nach Anspruch 1, dadurch gekennzeichnet, das der Gehalt an freiem $SO_3$ 10 bis 20% beträgt.

### Revendications

1. Procédé de production de quinizarine par réaction d'anhydride d'acide phtalique, de p-chlorophénol, d'acide sulfurique et d'acide borique ou d'anhydride d'acide borique à des températures élevées, caractérisé en ce qu'on prépare un mélange des partenaires réactionnels, qui contient au moins 10% en poids de SO$_3$ libre, par rapport à l'acide sulfurique, et dans lequel le rapport en poids du p-chlorphénol à la quantité totale H$_2$SO$_4$ + SO$_3$ a une valeur de 1:1,5 à 4,0, et on chauffe ce mélange à 150—220°C.

2. Procédé suivant la revendication 1, caractérisé en ce que la teneur en SO$_3$ libre va de 10 à 20%.

## Claims

1. Process for the preparation of quinizarin by reacting phthalic anhydride, p-chlorophenol, sulphuric acid and boric acid or boric anhydride at elevated temperatures, characterised in that a mixture of the reactants which contains at least 10 per cent by weight of free SO$_3$, based on the sulphuric acid, and in which the weight ratio of p-chlorophenol to the total amount of H$_2$SO$_4$ + SO$_3$ is 1:1.5 to 4.0 is initially introduced and the mixture is heated to 150—220°C.

2. Process according to claim 1, characterised in that the content of free SO$_3$ is 10 to 20%.